# FASCICULE DE BREVET EUROPEEN

(11) **EP 3 004 669 B1**
(45) Date de publication et mention de la délivrance du brevet: **29.03.2017**
(21) Numéro de dépôt: 14731812.5
(22) Date de dépôt: 03.06.2014
(51) Int. Cl.: F16C 7/02, B29C 65/00

(54) **BIELLE COMPOSITE, SON PROCEDE DE FABRICATION ET STRUCTURE DE PLAFOND OU DE PLANCHER AERONAUTIQUE L'INCORPORANT**
VERBUNDPLEUELSTANGE, VERFAHREN ZUR HERSTELLUNG DAVON UND FLUGZEUGDECKEN- ODER BODENSTRUKTUR DAMIT
COMPOSITE CONNECTING ROD, METHOD FOR PRODUCING SAME AND AIRCRAFT CEILING OR FLOOR STRUCTURE INCLUDING SAME

(30) Priorité: 05.06.2013 FR 1355173
(43) Date de publication de la demande: 13.04.2016
(73) Titulaire: Hutchinson, 75008 Paris (FR)
(72) Inventeur: GODON, Michaël, 18350 NEUVY DE CLOCHER (FR); GONZALEZ-BAYON, Cristina, 60123 BONNEUIL EN VALOIS (FR); FLORENTZ, Bertrand, F-45200 Paucourt (FR); CIOLCZYK, Jean-Pierre, F-45200 Montargis (FR)
(74) Mandataire: Gevers & Orès
(86) Numéro de dépôt international: PCT/IB2014/061917
(87) Numéro de publication internationale: WO 2014/195866

(56) Documents cités:
- EP-A1- 0 626 250
- EP-A1- 0 678 681
- EP-A2- 2 267 327
- DE-A1-102007 015 909
- DE-C1- 4 419 691

## Description

La présente invention concerne une bielle structurale composite, une structure de plafond ou de plancher aéronautique l'incorporant et un procédé de fabrication de cette bielle. L'invention s'applique d'une manière générale à une telle bielle adaptée à une reprise d'efforts majoritairement axiaux, en particulier mais non exclusivement dans le domaine aéronautique.

Les bielles structurales composites actuelles de reprise d'efforts axiaux présentent usuellement une forme allongée avec un corps principal central se terminant par deux extrémités aplaties de connexion à des structures générant notamment des efforts axiaux de traction-compression, la connexion étant typiquement réalisée par des axes de liaison respectivement montés à travers ces extrémités.

Le document WO-A1-2009/000925 présente une telle bielle, qui est obtenue via un procédé comprenant un thermoformage discontinu de préformes composites planes à base de fibres pré-imprégnées d'une résine thermodurcissable ou thermoplastique pour obtenir deux coquilles hémicylindriques, puis un assemblage de ces coquilles thermoformées par solidarisation latérale de leurs paires respectives de bords longitudinaux de préférence via un durcissement ou un thermosoudage de la résine. Cet assemblage des coquilles est tel que chaque bord d'une coquille recouvre ou est recouvert latéralement par un bord de l'autre coquille, formant ainsi des surfaces d'appui mutuelles pour ces coquilles de superficies relativement élevées.

Les bielles décrites dans ce document présentent l'inconvénient de présenter une masse et un coût de fabrication relativement élevés, en raison de leur procédé de fabrication discontinu et du mode d'assemblage des coquilles par recouvrement latéral de leurs bords qui requiert un doublage de l'épaisseur de la bielle.

On pourra également se référer au document DE 10 2007 015909 qui divulgue une bielle structurale selon le préambule de la revendication 1

De manière plus générale, un inconvénient majeur des bielles structurales composites connues à ce jour réside dans leur masse et leur coût élevés qui sont liés, d'une part, au procédé de transformation utilisé, typiquement un moulage de fibres sèches par transfert de résine thermodurcissable (« RTM » pour « Resin Transfer Molding ») ou un moulage de fibres pré-imprégnées d'une résine également thermodurcissable par compression dans un moule au moyen d'une vessie ou de mandrins et, d'autre part, au renforcement de ces bielles pour leur conférer une tenue suffisante aux impacts. La quantité de renforts nécessaire pour garantir la tenue aux impacts peut être relativement élevée. En effet, les résines thermodurcissables par exemple de type époxy présentent une grande fragilité du fait de leur très faible allongement à la rupture (typiquement quelques %). Il est donc nécessaire d'ajouter un nombre de plis inversement proportionnel à cet allongement à la rupture pour rendre ces résines plus résistantes à la déformation lors d'un impact, ce qui contribue à alourdir ces bielles réalisées en matériaux thermodurcissables.

Un but de la présente invention est de proposer une bielle structurale composite remédiant aux inconvénients précités, qui comprend un corps allongé essentiellement convexe autour d'un axe longitudinal de symétrie et deux extrémités de connexion à des structures adjacentes et qui est adaptée à une reprise d'efforts majoritairement axiaux (i.e. des efforts de traction-compression) générés par ces structures, la bielle comportant deux coquilles à deux bords longitudinaux qui sont assemblées l'une à l'autre en ces bords au niveau dudit corps et qui sont chacune à base d'au moins une nappe de coquille comprenant des fibres de coquille continues majoritairement parallèles à cet axe de symétrie et imprégnées d'une matrice thermoplastique de coquille.

A cet effet, une bielle selon l'invention est telle qu'elle incorpore des moyens d'assemblage des coquilles comprenant au moins une nappe d'assemblage enroulée autour et le long des coquilles au niveau dudit corps, la ou les nappe(s) d'assemblage comprenant des fibres d'assemblage majoritairement inclinées suivant un angle ± α par rapport audit axe de symétrie (i.e. par rapport auxdites fibres de coquille majoritairement axiales) et imprégnées d'une matrice thermoplastique d'assemblage refondue au contact de la matrice de coquille.

On notera que ces moyens d'assemblage sont extrinsèques aux coquilles, puisqu'ils sont rapportés autour de celles-ci en les enserrant via la ou les nappe(s) d'assemblage dont la matrice est refondue au contact de la matrice de chaque coquille à la manière d'un thermo-soudage entre la ou les nappe(s) d'assemblage et les nappes des coquilles. L'avantage de cette soudure par « refusion » est un gain de temps, d'énergie et donc de coût significatif par rapport aux résines thermodurcissables demandant de nombreuses minutes ou heures de cuisson.

On notera également que les deux coquilles sont ainsi assemblées par ce thermo-soudage de la ou des nappes d'assemblage sur et autour ces coquilles, contrairement à l'assemblage du document précité qui utilisait un soudage latéral mutuel des paires de bords respectives des coquilles.

On notera en outre que ces angles non nuls ± α entre les fibres inclinées d'assemblage et les fibres axiales de coquille peuvent être compris entre ± 30° et ± 90°, par exemple.

Selon une autre caractéristique préférentielle de l'invention, chaque coquille est à face externe convexe sensiblement hémicylindrique ou hémi-tronconique au niveau du corps et a ses dits deux bords longitudinaux assemblés contre ceux de l'autre coquille dans le prolongement de ces derniers, sans recouvrement latéral mutuel d'un bord d'une coquille par un bord de l'autre coquille.

Par « hémicylindrique », on entend de manière connue une géométrie de moitié de cylindre, lequel est défini par une directrice ou section constante en forme de ligne courbe au sens large (e.g. ovale ou elliptique, par exemple circulaire).

Par « hémi-tronconique », on entend une géométrie de moitié de tronc de cône définie par une section également en forme de ligne courbe (e.g. ovale ou elliptique, par exemple circulaire) mais qui varie de façon continûment croissante ou décroissante sur la longueur axiale de chaque coquille, avec un resserrage vers lesdites deux extrémités de connexion.

Avantageusement, lesdits moyens d'assemblage des coquilles peuvent comprendre au moins une paire de dites nappes d'assemblage qui sont majoritairement unidirectionnelles et sont enroulées sensiblement en hélice suivant des angles opposés α et -α (par exemple compris en valeur absolue entre 30° et 90°), ces nappes d'assemblage se recouvrant mutuellement en enserrant lesdites nappes de coquilles qui sont également majoritairement unidirectionnelles.

Selon une autre caractéristique préférentielle de l'invention, chacune desdites extrémités de connexion de la bielle présente deux parois parallèles aplaties de connexion qui sont respectivement formées d'un seul tenant avec les deux coquilles de part et d'autre d'un plan longitudinal médian de la bielle contenant lesdits bords longitudinaux et qui sont respectivement munies d'orifices en regard destinés à être traversés par un axe de liaison à une dite structure correspondante, des plis de renfort comprenant des fibres d'extrémités orientées au moins en partie sensiblement perpendiculairement audit axe de symétrie recouvrant directement lesdites fibres de coquilles de ces deux parois en chaque extrémité de connexion.

A titre encore plus préférentiel, lesdits plis de renfort, qui sont de type tissus, broderies ou unidirectionnels, recouvrent en chaque extrémité de connexion les faces externes respectives et/ou les faces internes respectives desdites deux parois de connexion.

Selon une autre caractéristique de l'invention, lesdites nappes de coquille et ladite au moins une nappe d'assemblage peuvent être constituées de matériaux identiques ou chimiquement compatibles, ladite matrice thermoplastique d'assemblage étant fondue au contact de ladite matrice thermoplastique de coquille.

De préférence, ladite matrice thermoplastique de coquille et ladite matrice thermoplastique d'assemblage sont à base d'au moins un polymère choisi dans le groupe constitué par les polyamides, les polyétherimides (PEI), les polysulfures de phénylène (PPS), les polyaryléthercétones (PAEK), les polyétheréthercétones (PEEK), les polyéthercétonecétones (PEKK) et leurs alliages, lesdites fibres de coquille et/ou lesdites fibres d'assemblage étant de préférence à base de fibres de carbone. On notera que d'autres polymères et fibres sont utilisables, pourvu qu'ils confèrent à la bielle une tenue aux impacts et une aptitude suffisante à la reprise des efforts axiaux.

On notera qu'une bielle ainsi constituée présente, notamment grâce à ces matériaux thermoplastiques ayant des propriétés intrinsèques d'autoextinguibilité, de faible densité, toxicité de fumée et une tenue aux impacts améliorée, un allégement accru de manière significative pour une même valeur donnée de ces propriétés (e.g. la tenue aux impacts) par rapport aux bielles structurales composites connues.

Cette bielle selon l'invention présente ainsi notamment des propriétés mécaniques améliorées concernant la reprise des efforts axiaux et la tenue aux chocs, ce qui se traduit par un gain de masse sur la bielle pour l'obtention de propriétés déterminées.

On notera que de manière connue, les bielles structurales notamment pour structures de plafonds, de planchers ou de caissons centraux de fuselages aéronautiques doivent pouvoir résister à des charges limites prédéfinies tout en ayant subi préalablement des impacts les endommageant qui sont représentatifs de chocs probables, mais non aisément délectables, en fonctionnement. Ces charges limites sont une combinaison de charges axiales faisant travailler la bielle en traction/compression et de charges radiales la faisant travailler en flexion ou flambage lorsqu'elle est cumulée à la compression. C'est ainsi qu'un endommagement par impact préalable d'une bielle diminue sa capacité à résister à ces charges. Selon la fragilité de la résine thermodurcissable utilisée pour une bielle de l'art antérieur, il est donc nécessaire de lui adjoindre un certain nombre de plis supplémentaires pour satisfaire à la résistance aux impacts.

La présente invention telle qu'exposée ci-dessus permet d'utiliser pour les coquilles, d'une part, des nappes de fibres majoritairement ou exclusivement unidirectionnelles qui sont optimales pour résister à ces charges limites de compression et de flambage et, d'autre part, une ou des matrices thermoplastiques ayant un allongement à la rupture bien plus élevé que celui des matrices thermodurcissables, ce qui permet de diminuer le nombre de plis périphériques pour l'obtention de la résistance à l'impact requise.

Selon un autre aspect de l'invention, ledit corps de bielle peut comporter en outre, radialement entre ladite au moins une nappe de coquille pour chaque coquille et ladite au moins une nappe d'assemblage ou bien radialement entre des dites nappes d'assemblage, au moins une couche intermédiaire d'amortissement et de répartition d'impacts notamment radiaux qui est réalisée en un matériau apte à absorber et à répartir l'énergie transmise à la bielle par ces impacts.

On notera que cette interposition d'une telle couche intermédiaire « sacrificielle », de préférence réalisée en un matériau amortissant très léger (par exemple une couche amortissante en nid d'abeille, ou réalisée en d'autres matériaux amortissants), permet avantageusement d'absorber et de répartir - pour en diminuer l'impact - les chocs notamment radiaux en vue de minimiser la vulnérabilité des nappes de coquilles majoritairement unidirectionnelles disposées à dessein au coeur de la bielle pour lui conférer la résistance requise aux charges limites précitées. L'épaisseur de cette couche « sacrificielle » de l'invention peut être aisément choisie en fonction du niveau d'énergie à absorber. Cette couche intermédiaire permet ainsi de préserver au moins partiellement, en cas de choc, l'intégrité des fibres de coquille majoritairement unidirectionnelles qui assurent la tenue de la bielle.

Avantageusement, ladite au moins une couche intermédiaire de l'invention peut en outre être une couche de révélation d'impacts apte à témoigner d'un degré d'endommagement de la bielle suite à ces impacts en vue de son remplacement, à la manière d'un indicateur de chocs, par mesure de la profondeur et/ou de la largeur de cette couche affectée(s) par ces impacts (i.e. en étalonnant au préalable la profondeur et/ou la largeur d'impact selon les chocs encaissés, pour déterminer s'il est nécessaire de changer la bielle).

En effet, on sait que les pièces composites présentent l'inconvénient de pouvoir être sérieusement endommagées intérieurement (e.g. par des délaminages, des ruptures de fibres ou des fissures) sans que cela soit visible de l'extérieur, ce qui oblige leurs concepteurs à les surdimensionner pour qu'elles puissent supporter toutes les charges de fatigue et les charges extrêmes, en tenant compte d'un possible endommagement préalable (ces pièces surdimensionnées sont dites « tolérantes aux dommages »).

Ainsi, l'intégration selon l'invention d'un indicateur de dommage à la bielle permet non seulement de rendre l'impact visible, mais en outre d'en apprécier visuellement la sévérité. En effet, la profondeur d'enfoncement en cas d'impact de ladite couche intermédiaire selon l'invention permet d'évaluer la gravité de cet impact et donc la nécessité d'un remplacement, mais pour des niveaux d'impacts plus faibles que ceux qui seraient nécessaires pour créer un dommage visible sur une bielle non équipée d'un tel indicateur. Cette couche intermédiaire « témoin » de l'invention autorise avantageusement un allégement supplémentaire de la bielle, en évitant de la surdimensionner comme dans l'art antérieur pour la rendre « tolérante aux dommages non visibles ».

Une structure de plafond ou de plancher aéronautique selon l'invention comporte au moins une bielle telle que définie ci-dessus.

Un procédé de fabrication selon l'invention d'une bielle telle que définie ci-dessus comprend:
a) une conformation en continu de n nappes planes de coquille (n entier ≥ 2) majoritairement unidirectionnelles à base de fibres continues imprégnées de ladite matrice thermoplastique de coquille, à partir de n bobines déroulant ces nappes vers un conformateur,
b) un formage à chaud en continu de ces nappes de coquille par tirage incluant leur consolidation, pour l'obtention d'ébauches profilées des coquilles à faces externes convexes,
c) un chauffage suivi d'un formage des deux extrémités de chaque ébauche profilée de coquille, pour l'obtention de chaque coquille présentant en ses deux extrémités deux parois aplaties respectives de connexion auxdites structures,
d) pour chaque bielle à assembler, un assemblage des deux coquilles avec les bords longitudinaux d'une coquille qui sont positionnés contre ceux de l'autre coquille de sorte à former ledit corps de bielle et avec, en chaque extrémité de la bielle, les deux parois aplaties de connexion qui sont parallèles et espacées l'une de l'autre, cet assemblage étant mis en oeuvre :
   - par enroulement de ladite au moins une nappe d'assemblage autour et le long des coquilles au niveau dudit corps en inclinant lesdites fibres d'assemblage d'un angle ± α par rapport audit axe de symétrie, et
   - par un chauffage local concomitant de la ou des nappes d'assemblage enroulées sur les nappes de coquilles, ou des seules nappes de coquille, ou encore desdites nappes de coquille et en même temps de ladite au moins une nappe d'assemblage (quels que soient les moyens de chauffage), et
e) optionnellement une interposition, radialement entre les nappe de coquilles et ladite au moins une nappe d'assemblage ou bien radialement entre des dites nappes d'assemblage, d'au moins une couche intermédiaire d'amortissement et de répartition d'impacts notamment radiaux qui est réalisée en un matériau apte à absorber et à répartir l'énergie transmise à la bielle par ces impacts et qui est de préférence apte à témoigner du degré d'endommagement de la bielle suite à ces impacts en vue de son remplacement, par une mesure de la profondeur et/ou de la largeur de cette couche.

Avantageusement, à l'étape c), le formage des deux extrémités de chaque ébauche profilée de coquille peut être réalisé par moulage par compression, estampage ou thermoformage.

Egalement avantageusement, l'étape c) peut comprendre en outre l'application, sur lesdites parois aplaties des extrémités respectives de chaque ébauche de coquille, de plis de renfort de préférence de type tissus, broderies ou unidirectionnels comprenant des fibres d'extrémités orientées au moins en partie sensiblement perpendiculairement audit axe de symétrie, ces fibres ainsi orientées pouvant recouvrir directement lesdites fibres de coquille sur et/ou sous lesdites deux parois de connexion espacées en chaque extrémité de connexion de la bielle obtenue à l'étape d).

Egalement avantageusement, l'étape c) peut comprendre en outre, en chaque extrémité de chaque ébauche profilée, un perçage d'orifices à travers lesdites deux parois de connexion pour le montage d'un axe de liaison respectivement destiné à la fixation d'une dite structure.

Selon une autre caractéristique de l'invention, à l'étape d), l'enroulement de ladite au moins une nappe d'assemblage autour et le long des coquilles de chaque bielle peut être mis en oeuvre par entraînement en rotation des deux coquilles positionnées en regard autour d'un mandrin.

On notera en variante que les deux coquilles positionnées bords contre bords pourrait être fixes, et que l'on pourrait dans ce cas enrouler via des moyens mobiles en rotation ladite au moins une nappe d'assemblage autour des coquilles.

De préférence, on utilise des matériaux identiques ou chimiquement compatibles pour les matrices thermoplastiques respectives des nappes de coquille à l'étape a) et de la ou chaque nappe d'assemblage à l'étape d), l'assemblage étant réalisé à cette étape d) par refusion de la matrice d'assemblage sur la matrice de coquille à la manière d'un thermo-soudage.

A titre encore plus préférentiel, on utilise pour la matrice de coquille à l'étape a) et pour celle d'assemblage à l'étape d) des matériaux à base d'au moins un polymère choisi dans le groupe précité, et des fibres de carbone pour les fibres de coquille et/ou les fibres d'assemblage.

D'autres caractéristiques, avantages et détails de la présente invention ressortiront à la lecture de la description suivante d'un exemple de réalisation de l'invention, donné à titre illustratif et non limitatif, ladite description étant réalisée en référence avec les dessins joints, parmi lesquels :
la figure 1 est une vue latérale en perspective d'une bielle selon l'invention à l'état assemblé,
la figure 2 est une vue latérale en perspective d'une autre bielle selon l'invention également à l'état assemblé, montrant l'interface de contact entre les deux coquilles de cette bielle,
la figure 3 est une vue schématique en section axiale de cette bielle, perpendiculairement à ses parois d'extrémité,
la figure 4 est une vue schématique des deux coquilles profilées utilisées pour fabriquer la bielle de la figure 1 ou 2,
la figure 5 est une vue schématique d'une installation selon l'invention pour la fabrication en continu de ces coquilles profilées,
la figure 6 est une diagramme schématique montrant selon un exemple de l'invention les étapes suivies pour le formage sous forme de parois aplaties des deux extrémités de connexion de chaque coquille avant positionnement et assemblage de deux coquilles,
la figure 7 est une vue schématique partielle éclatée montrant l'application de plis orientés sur les deux faces de la paroi aplatie d'une extrémité de connexion ainsi formée pour chacune des deux coquilles constituées de nappes unidirectionnelles de fibres axiales, après positionnement et avant assemblage de ces deux coquilles,
la figure 8 est une vue schématique d'une installation selon un exemple de l'invention pour l'assemblage de coquilles positionnées bords contre bords, par enroulement de nappes croisées autour et le long des coquilles,
la figure 9 est une vue schématique en section axiale similaire à la figure 3 illustrant le mode d'enroulement suivant des angles opposés de deux nappes croisées autour et le long des coquilles ainsi positionnées, et montrant les matrices thermoplastiques respectives de ces nappes ainsi que des nappes de coquilles,
la figure 10 est une vue également schématique mais en perspective latérale montrant le début de cet enroulement des nappes croisées sur les coquilles de la figure 9 et illustrant l'orientation des fibres respectives des nappes de coquilles et des nappes d'assemblage,
la figure 11 est une vue schématique partielle éclatée montrant, à l'instar de la figure 7, ces nappes croisées dont les fibres d'assemblage recouvrent les fibres axiales des coquilles, avec lesdits plis orientés appliqués sur les deux parois aplaties d'une extrémité de connexion de la bielle,
la figure 12 est une vue schématique en section axiale similaire à la figure 9, montrant une bielle selon l'invention en cours d'assemblage qui incorpore une couche d'amortissement disposée entre les nappes de coquilles et les deux nappes croisées d'assemblage,
la figure 13 est une vue schématique en section transversale de cette bielle en cours d'assemblage selon le plan XIII-XIII de la figure 12, et
la figure 14 est une vue schématique en section transversale d'une autre bielle selon l'invention en variante de la figure 13, qui incorpore une couche d'amortissement entre les deux seules nappes croisées d'assemblage.

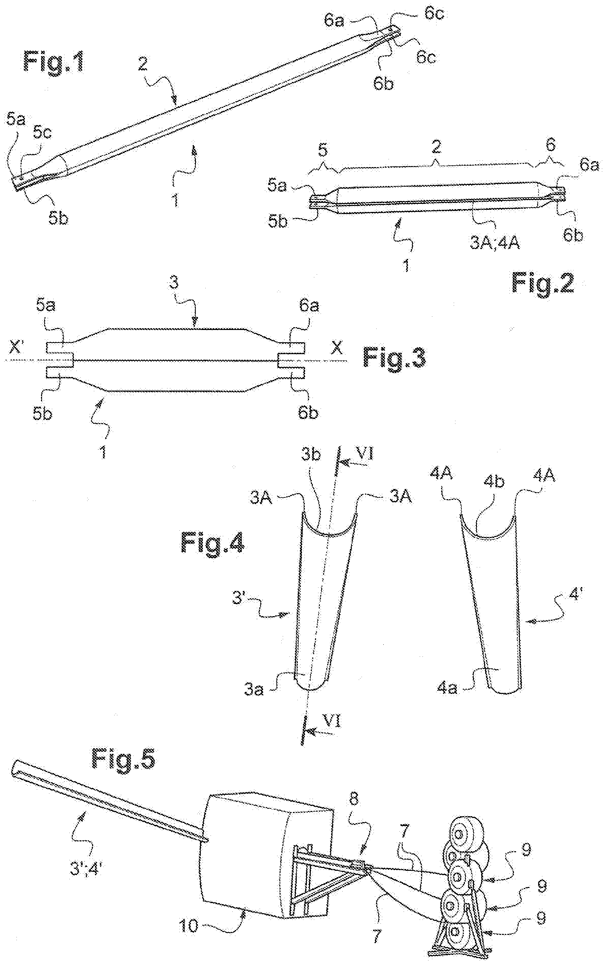

Comme illustré aux figures 1 à 3, une bielle 1 selon l'invention comporte un corps convexe 2 à deux coquilles 3 et 4 assemblées l'une contre l'autre, et deux extrémités de connexion 5 et 6 destinées à relier la bielle 1 à des structures adjacentes via deux axes de liaison (non visibles) à monter respectivement dans ces extrémités 5 et 6. Chaque extrémité de connexion 5, 6 forme une chape à deux parois plates 5a et 5b, 6a et 6b parallèles qui sont espacées de part et d'autre de l'axe de symétrie X'X de la bielle 1 et qui sont percées de deux orifices 5c, 6c en regard destinés à recevoir l'un des axes de liaison.

La figure 4 montre les deux ébauches profilées 3' et 4' des coquilles 3 et 4 utilisées pour fabriquer cette bielle 1 de l'invention, avant formage des deux extrémités 3a et 3b, 4a et 4b de chaque coquille 3, 4 pour obtenir les deux parois aplaties d'extrémité 5a et 5b, 6a et 6b visibles aux figures 1 à 3. Ces deux ébauches 3' et 4' présentent chacune une même géométrie hémicylindrique, qui est obtenue par un procédé en continu de conformation/ formage de nappes majoritairement unidirectionnelles 7 comme illustré à la figure 5.

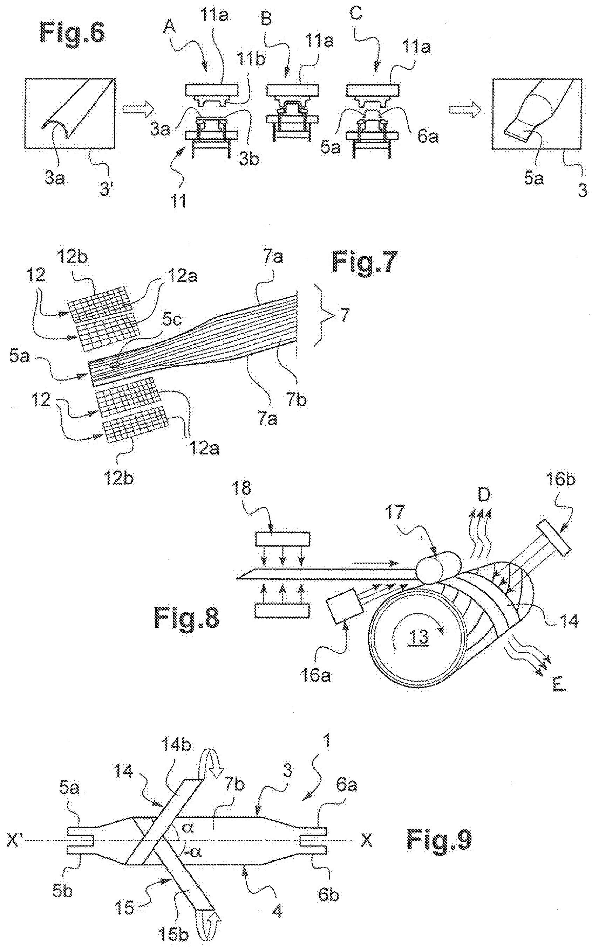

Cette figure 5 montre le passage à cet effet dans un conformateur 8 de n=3 nappes planes de coquille 7 unidirectionnelles à base de fibres 7a continues dans la direction longitudinale (e.g. des fibres de carbone) et imprégnées d'une matrice thermoplastique de coquille 7b (e.g. du PEEK ou du PPS) à partir de trois bobines 9 recevant et déroulant ces nappes 7, puis le formage en continu à chaud de ces nappes 7 par un dispositif 10 de tirage, pour l'obtention des ébauches de coquilles 3' et 4' hémicylindriques dans lesquelles ces nappes 7 ont été consolidées de manière concomitante (la structure des nappes 7 est visible à la figure 7). Ce formage est par exemple réalisé à une température d'environ 300° C pour la fusion de cette matrice 7b et pour maintenir les fibres 7a en position correcte.

La figure 6 montre un exemple selon l'invention pour former via un moulage par compression les deux extrémités 3a et 3b, 4a et 4b de chaque ébauche 3' et 4' obtenue en aval du dispositif 10 (étant précisé qu'un estampage ou un thermoformage serait également utilisable pour ce formage des extrémités 3a et 3b, 4a et 4b). On réalise au préalable, pour permettre ce formage, un pré-chauffage de ces deux extrémités 3a et 3b, 4a et 4b d'ébauche 3', 4' puis, comme montré en A (en section axiale plane suivant le plan sommital VI-VI de la figure 4), on insère l'ébauche profilée 3', 4' dans un moule 11. On referme ensuite la paroi supérieure 11a du moule 11 (étape B) pourvue sur sa face interne d'une contre-forme 11 b apte à former ces extrémités 3a et 3b, 4a et 4b en appliquant une pression déterminée sur celles-ci ce qui, après ouverture de la paroi supérieure 11a et extraction de l'ébauche 3', 4' (étape C), permet d'obtenir une paroi aplatie 5a et 6a, 5b et 6b en chacune de ses deux extrémités 3a et 3b, 4a et 4b.

Chaque ébauche 3', 4' de coquille 3, 4 ainsi obtenue à parois d'extrémité aplaties 5a et 5b, 6a et 6b est formée des nappes unidirectionnelles axiales de coquille 7, qui s'étendent continûment sur le corps 2 et sur ces parois d'extrémités 5a et 5b, 6a et 6b.

Comme illustré à la figure 7, cette opération de formage des extrémités 3a et 3b, 4a et 4b de chaque ébauche 3', 4' inclut en outre une application de plis de renfort orientés 12 sur les deux faces externe et interne de chaque paroi aplatie d'extrémité 5a et 5b, 6a et 6b, et optionnellement en outre d'inserts (non visibles) pour le perçage en 5c, 6c de chaque paroi 5a et 5b, 6a et 6b en vue d'y monter un axe de liaison assurant la liaison de la bielle 1 aux deux structures adjacentes. Ces plis 12 peuvent être chacun constitués d'un tissu ou de fibres unidirectionnelles comprenant dans ces deux cas, une fois appliqués sur et sous chaque paroi d'extrémité 5a et 5b, 6a et 6b, des fibres orientées 12a formant un angle d'environ 90° avec les fibres unidirectionnelles axiales 7a de chaque paroi 5a et 5b, 6a et 6b que ces fibres orientées 12a recouvrent (étant précisé que dans l'exemple de la figure 7, les plis 12 comprennent des fibres axiales 12b, en plus des fibres 12a orientées à 90°).

On notera que cet ajout de plis 12 et éventuellement d'inserts sur les parois d'extrémité 5a et 5b, 6a et 6b des coquilles 3 et 4 doit être avantageusement réalisé tout en conservant l'intégralité des fibres axiales 7a constituant le corps 2 de chaque coquille 3, 4.

Enfin et comme illustré aux figures 8 à 10, on positionne d'abord les deux coquilles 3 et 4 de manière que les deux bords longitudinaux 3A de l'une soient précisément appliqués contre ceux 4A de l'autre dans le prolongement direct de ces bords 3A et 4A. Puis on enserre les coquilles 3 et 4 ainsi positionnées sur un mandrin 13 via un « enrubannage » par des nappes d'assemblage croisées 14 et 15 par exemple au nombre de deux, qui sont chacune constituées de fibres unidirectionnelles 14a et 15a (e.g. de carbone, comme les fibres de coquille 7a) imprégnées d'une matrice thermoplastique 14b et 15b identique, dérivée de ou compatible avec celle 7b des coquilles (e.g. à base de PEEK ou de PPS, comme les matrices de coquille 7b).

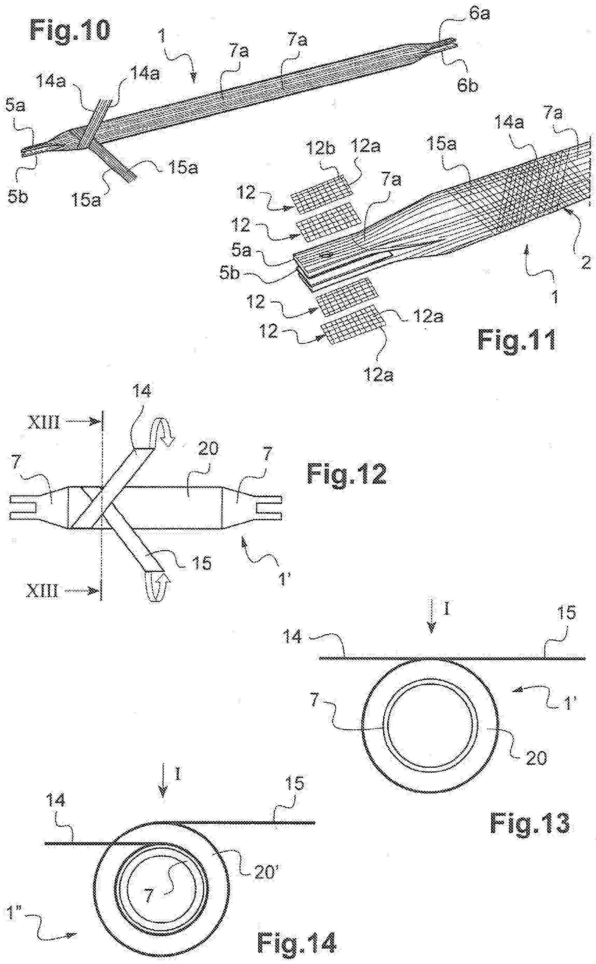

A cet effet, on enroule en hélice autour et le long des corps respectifs 2 des coquilles 3 et 4 (i.e. pas au niveau des parois d'extrémité 5a et 5b, 6a et 6b des coquilles 3 et 4, voir figures 9 et 10), les nappes d'assemblage 14 et 15 à fibres 14a et 15a majoritairement inclinées suivant des angles α et -α par rapport à l'axe X'X, tout en chauffant localement en même temps les nappes d'assemblage 14 et 15 en cours d'enroulement sur les nappes de coquille 7 par des moyens de chauffage 16a et 16b appropriés pour assurer la fusion des matrices thermoplastiques 7b, 14b, 15b et la cohésion de l'ensemble (voir figure 8). Inversement, on peut également choisir de chauffer plutôt les nappes de coquille 7 pendant l'enroulement des nappes d'assemblage 14 et 15, l'important étant de thermo-réactiver en limite de fusion au moins l'un des côtés dans la zone d'entrée au contact des nappes.

Comme visible aux figures 12 et 13, on peut interposer une couche intermédiaire 20 d'amortissement d'impacts radiaux (voir flèche I) et avantageusement apte à témoigner du degré d'endommagement de la bielle 1' suite à ces impacts, radialement à l'extérieur des nappes de coquilles 7 et radialement à l'intérieur des deux nappes d'assemblage 14 et 15.

Ou bien comme visible à la figure 14, on peut en variante choisir d'interposer une telle couche intermédiaire 20' d'amortissement d'impacts radiaux (voir également la flèche I) et avantageusement apte à témoigner du degré d'endommagement de la bielle 1" suite à ces impacts, radialement entre les deux nappes d'assemblage 14 et 15.

On réalise avantageusement cet enroulement des nappes d'assemblage 14 et 15 en faisant tourner le mandrin 13 recouvert des deux coquilles 3 et 4 autour de son axe de révolution (confondu avec l'axe de symétrie X'X des coquilles 3 et 4), par des moyens d'entraînement en rotation (non représentés) solidaires des deux extrémités de ce mandrin 13, en même temps que l'on applique sous tension suivant ces angles α et -α (par exemple compris en valeur absolue entre 30° et 90°) les nappes 14 et 15 sur les nappes 7 des coquilles 3 et 4 par des moyens d'application de bandes sous tension ou de pression 17 par exemple de type rouleau.

Ces moyens de chauffage local 16a et 16b peuvent par exemple consister en des moyens de soufflage d'air chaud, en un pistolet d'air chaud, en des moyens émettant dans le domaine infrarouge ou en des rayonnements laser, et peuvent être agencés en aval de moyens de préchauffage 18 des nappes d'assemblage 14 et 15. On notera que ces moyens 16a, 16b, 18 sont illustrés uniquement à titre d'exemple à la figure 8, laquelle montre en outre des dégagements de chaleur par convection (flèches D) et par radiation (flèches E).

On obtient finalement au terme de cet assemblage la bielle 1 illustrée en vue éclatée à la figure 11, avec son corps 2 à fibres de coquille axiales 7a qui sont revêtues des fibres croisées d'assemblage 14a et 15a et avec ses extrémités de connexion 5 et 6 à fibres de coquille 7a également axiales qui sont revêtues des plis de renfort orientés 12.

Comme indiqué précédemment, on notera que les bielles 1 selon l'invention optimisé dans le sens de la sollicitation des efforts, se traduisant par un gain de masse.

## Revendications

1. Bielle structurale composite (1, 1', 1") qui comprend un corps allongé (2) essentiellement convexe autour d'un axe longitudinal de symétrie (X'X) et deux extrémités de connexion (5 et 6) à des structures adjacentes et qui est adaptée à une reprise d'efforts majoritairement axiaux générés par ces structures, la bielle comportant deux coquilles (3 et 4) à deux bords longitudinaux (3A et 4A) qui sont assemblées l'une à l'autre en ces bords au niveau dudit corps et qui sont chacune à base d'au moins une nappe de coquille (7) comprenant des fibres de coquille continues (7a) majoritairement parallèles à cet axe de symétrie et imprégnées d'une matrice thermoplastique de coquille (7b), **caractérisée en ce que** la bielle incorpore des moyens d'assemblage (14 et 15) des coquilles comprenant au moins une nappe d'assemblage (14, 15) enroulée autour et le long des coquilles au niveau dudit corps, la ou les nappe(s) d'assemblage comprenant des fibres d'assemblage (14a, 15a) majoritairement inclinées suivant un angle ± α par rapport audit axe de symétrie et imprégnées d'une matrice thermoplastique d'assemblage (14b, 15b) fondue au contact de la matrice de coquille.

2. Bielle (1, 1', 1") selon la revendication 1, **caractérisée en ce que** chaque coquille (3, 4) est à face externe convexe sensiblement hémicylindrique ou hémi-tronconique au niveau dudit corps (2) et a ses dits deux bords longitudinaux (3A, 4A) assemblés contre ceux de l'autre coquille (4, 3) dans le prolongement de ces derniers, sans recouvrement latéral mutuel d'un bord (3A) d'une coquille (3) par un bord (4A) de l'autre coquille (4).

3. Bielle (1, 1', 1") selon la revendication 1 ou 2, **caractérisée en ce que** lesdits moyens d'assemblage (14, 15) des coquilles (3 et 4) comprennent au moins une paire de dites nappes d'assemblage (14 et 15) qui sont majoritairement unidirectionnelles et sont enroulées sensiblement en hélice suivant des angles opposés α et -α, ces nappes d'assemblage se recouvrant mutuellement en enserrant lesdites nappes de coquilles (7) également majoritairement unidirectionnelles.

4. Bielle (1, 1', 1") selon une des revendications précédentes, **caractérisée en ce que** chacune desdites extrémités de connexion (5, 6) de la bielle présente deux parois parallèles aplaties de connexion (5a et 5b, 6a et 6b) qui sont respectivement formées d'un seul tenant avec les deux coquilles (3 et 4) de part et d'autre d'un plan longitudinal médian de la bielle contenant lesdits bords longitudinaux (3A et 4A) et qui sont respectivement munies d'orifices (5c, 6c) en regard destinés à être traversés par un axe de liaison à une dite structure correspondante, des plis de renfort (12) comprenant des fibres d'extrémité (12a) orientées au moins en partie sensiblement perpendiculairement audit axe de symétrie (X'X) recouvrant directement lesdites fibres de coquilles (7a) de ces deux parois en chaque extrémité de connexion.

5. Bielle (1, 1', 1") selon la revendication 4, **caractérisée en ce que** lesdits plis de renfort (12), qui sont de type tissus, broderies ou unidirectionnels, recouvrent en chaque extrémité de connexion (5, 6) les faces externes respectives et/ou les faces internes respectives desdites deux parois de connexion (5a et 5b, 6a et 6b).

6. Bielle (1, 1', 1") selon une des revendications précédentes, **caractérisée en ce que** lesdites nappes de coquille (7) et ladite au moins une nappe d'assemblage (14, 15) sont constituées de matériaux identiques ou chimiquement compatibles, ladite matrice thermoplastique d'assemblage (14b, 15b) étant fondue au contact de ladite matrice thermoplastique de coquille (7b).

7. Bielle (1, 1', 1") selon une des revendications précédentes, **caractérisée en ce que** ladite matrice thermoplastique de coquille (7b) et ladite matrice thermoplastique d'assemblage (14b, 15b) sont à base d'au moins un polymère choisi dans le groupe constitué par les polyamides, les polyétherimides (PEI), les polysulfures de phénylène (PPS), les polyaryléthercétones (PAEK), les polyétheréthercétones (PEEK), les polyéthercétonecétones (PEKK) et leurs alliages, lesdites fibres de coquille (7a) et/ou lesdites fibres d'assemblage (14a, 15a) étant de préférence à base de fibres de carbone.

8. Bielle (1', 1") selon une des revendications précédentes, **caractérisée en ce que** ledit corps comporte en outre, radialement entre ladite au moins une nappe de coquille (7) pour chaque coquille (3, 4) et ladite au moins une nappe d'assemblage (14, 15) ou bien radialement entre des dites nappes d'assemblage (14 et 15), au moins une couche intermédiaire (20, 20') d'amortissement d'impacts (I) notamment radiaux qui est réalisée en un matériau apte à absorber et à répartir l'énergie de ces impacts, ladite au moins une couche intermédiaire étant en outre de préférence apte à témoigner du degré d'endommagement de la bielle suite à ces impacts en vue de son remplacement, par une mesure de profondeur et/ou de largeur de ladite au moins une couche.

9. Structure de plafond ou de plancher aéronautique, **caractérisée en ce qu'**elle comporte au moins une bielle (1, 1', 1") selon une des revendications précédentes.

10. Procédé de fabrication d'une bielle (1, 1', 1") selon une des revendications 1 à 8, **caractérisé en ce qu'**il comprend:
a) une conformation en continu de n nappes planes de coquille (7) (n entier ≥ 2) majoritairement unidirectionnelles à base de fibres continues (7a) imprégnées de ladite matrice thermoplastique de coquille (7b), à partir de n bobines (9) déroulant ces nappes vers un conformateur (8),
b) un formage à chaud en continu de ces nappes de coquille par tirage incluant leur consolidation, pour l'obtention d'ébauches profilées (3' et 4') des coquilles (3 et 4) à faces externes convexes,
c) un chauffage suivi d'un formage des deux extrémités (3a et 3b, 4a et 4b) de chaque ébauche profilée de coquille, pour l'obtention de chaque coquille (3, 4) présentant en ses deux extrémités deux parois aplaties respectives (5a et 6a, 5b et 6b) de connexion auxdites structures,
d) pour chaque bielle à assembler, un assemblage des deux coquilles (3 et 4) avec les bords longitudinaux (3A) d'une coquille (3) qui sont positionnés contre ceux (4A) de l'autre coquille (4) de sorte à former ledit corps (2) de bielle et avec, en chaque extrémité (5, 6) de la bielle, les deux parois aplaties de connexion (5a et 5b, 6a et 6b) qui sont parallèles et espacées l'une de l'autre, cet assemblage étant mis en oeuvre :
- par enroulement de ladite au moins une nappe d'assemblage (14, 15) autour et le long des coquilles au niveau dudit corps en inclinant lesdites fibres d'assemblage (14a, 15a) d'un angle ± α par rapport audit axe de symétrie (X'X),
- par un chauffage local concomitant de la ou des nappes d'assemblage enroulées sur les nappes de coquilles (7), ou des seules nappes de coquille, ou encore desdites nappes de coquille et en même temps de ladite au moins une nappe d'assemblage, et
e) optionnellement une interposition, radialement entre les nappes de coquilles (7) et ladite au moins une nappe d'assemblage (14, 15) ou bien radialement entre des dites nappes d'assemblage (14 et 15), d'au moins une couche intermédiaire (20, 20') d'amortissement et de répartition d'impacts notamment radiaux (I) qui est réalisée en un matériau apte à absorber et à répartir l'énergie transmise à la bielle (1', 1") par ces impacts et qui est de préférence apte à témoigner du degré d'endommagement de la bielle suite à ces impacts en vue de son remplacement, par une mesure de profondeur et/ou de largeur de cette couche.

11. Procédé de fabrication d'une bielle (1, 1', 1") selon la revendication 10, **caractérisé en ce qu'**à l'étape c), le formage des deux extrémités (3a et 3b, 4a et 4b) de chaque ébauche profilée de coquille (3', 4') est réalisé par moulage par compression, estampage ou thermoformage.

12. Procédé de fabrication d'une bielle (1, 1', 1") selon la revendication 10 ou 11, **caractérisé en ce que** l'étape c) comprend en outre l'application, sur lesdites parois aplaties (5a et 6a, 5b et 6b) des extrémités respectives (3a et 3b, 4a et 4b) de chaque ébauche de coquille (3', 4'), de plis de renfort (12) de préférence de type tissus, broderies ou unidirectionnels comprenant des fibres d'extrémités (12a) orientées au moins en partie sensiblement perpendiculairement audit axe de symétrie (X'X), ces fibres ainsi orientées recouvrant directement lesdites fibres de coquille (7a) sur et/ou sous lesdites deux parois de connexion (5a et 5b, 6a et 6b) espacées en chaque extrémité de connexion (5, 6) de la bielle obtenue à l'étape d).

13. Procédé de fabrication d'une bielle (1, 1', 1") selon une des revendications 10 à 12, **caractérisé en ce que** l'étape c) comprend en outre, en chaque extrémité (3a, 3b, 4a, 4b) de chaque ébauche profilée (3', 4'), un perçage d'orifices (5c, 6c) à travers lesdites deux parois de connexion (5a et 5b, 6a et 6b) pour le montage d'un axe de liaison respectivement destiné à la fixation d'une dite structure.

14. Procédé de fabrication d'une bielle (1, 1', 1") selon une des revendications 10 à 13, **caractérisé en ce qu'**à l'étape d), l'enroulement de ladite au moins une nappe d'assemblage (14, 15) autour et le long des coquilles (3 et 4) de chaque bielle est mis en oeuvre par entraînement en rotation des deux coquilles positionnées en regard autour d'un mandrin (13).

15. Procédé de fabrication d'une bielle (1, 1', 1") selon une des revendications 10 à 14, **caractérisé en ce que** l'on utilise des matériaux identiques ou chimiquement compatibles pour les matrices thermoplastiques respectives desdites nappes de coquille (7) à l'étape a) et de ladite au moins une nappe d'assemblage (14, 15) à l'étape d), l'assemblage étant réalisé à cette étape d) par refusion de la matrice d'assemblage (14b, 15b) sur la matrice de coquille (7b) à la manière d'un thermo-soudage.

16. Procédé de fabrication d'une bielle (1, 1', 1") selon une des revendications 10 à 15, **caractérisé en ce que** l'on utilise :
- pour ladite matrice thermoplastique de coquille (7b) à l'étape a) et pour ladite matrice thermoplastique d'assemblage (14b, 15b) à l'étape d), des matériaux à base d'au moins un polymère choisi dans le groupe constitué par les polyamides, les polyétherimides (PEI), les polysulfures de phénylène (PPS), les polyaryléthercétones (PAEK), les polyétheréthercétones (PEEK), les polyéthercétonecétones (PEKK) et leurs alliages, et de préférence
- des fibres de carbone pour lesdites fibres de coquille (7a) et/ou lesdites fibres d'assemblage (14a, 15a).

## Patentansprüche

1. Verbundstrukturpleuelstange (1, 1', 1"), die einen länglichen, im Wesentlichen um eine Längssymmetrieachse (X'X) konvexen Körper (2) und zwei Verbindungsenden (5 und 6) mit benachbarten Strukturen umfasst und die für eine Übernahme mehrheitlich axialer Kräfte ausgebildet ist, die von diesen Strukturen erzeugt werden, wobei die Pleuelstange zwei Schalen (3 und 4) mit zwei Längsrändern (3A und 4A) aufweist, die an diesen Rändern im Bereich des Körpers miteinander verbunden sind und die jeweils auf der Basis von mindestens einer Schalenbahn (7) sind, umfassend zu dieser Symmetrieachse mehrheitlich parallele, mit einer thermoplastischen Schalenmatrix (7b) imprägnierte kontinuierliche Schalenfasern (7a), **dadurch gekennzeichnet, dass** die Pleuelstange Verbindungsmittel (14 und 15) der Schalen einschließt, die mindestens eine um und entlang der Schalen im Bereich des Körpers gewickelte Verbindungsbahn (14, 15) umfassen, wobei die Verbindungsbahn(en) mehrheitlich eine in Bezug auf die Symmetrieachse gemäß einem Winkel ± α geneigte und mit einer thermoplastischen, im Kontakt mit der Schalenmatrix verschmolzenen Verbindungsmatrix (14b, 15b) imprägnierte Verbindungsfasern (14a, 15a) umfassen.

2. Pleuelstange (1, 1', 1") nach Anspruch 1, **dadurch gekennzeichnet, dass** jede Schale (3, 4) im Bereich des Körpers (2) eine konvexe, etwa halbzylindrische oder halbkegelstumpfförmige Außenfläche hat, die an ihren zwei Längsrändern (3A, 4A) mit denen der anderen Schale (4, 3) in Verlängerung derselben ohne gegenseitige Überlappung eines Rands (3A) einer Schale (3) durch einen Rand (4A) der anderen Schale (4) verbunden ist.

3. Pleuelstange (1, 1', 1") nach Anspruch 1 oder 2, **dadurch gekennzeichnet, dass** die Verbindungsmittel (14, 15) der Schalen (3 und 4) mindestens ein Paar der Verbindungsbahnen (14 und 15) umfassen, die mehrheitlich eindirektional und etwa schraubenförmig gemäß entgegengesetzten Winkeln α und -α gewickelt sind, wobei sich diese Verbindungsbahnen gegenseitig überlappen und dabei die ebenfalls mehrheitlich eindirektionalen Schalenbahnen (7) umschließen.

4. Pleuelstange (1, 1', 1") nach einem der vorangehenden Ansprüche, **dadurch gekennzeichnet, dass** jedes der Verbindungsenden (5, 6) der Pleuelstange zwei parallele abgeflachte Verbindungswände (5a und 5b, 6a und 6b) aufweist, die jeweils zusammenhängend mit den zwei Schalen (3 und 4) auf der einen und der anderen Seite einer mittleren Längsebene der Pleuelstange gebildet sind, welche die Längsränder (3A und 4A) enthält und die jeweils mit Öffnungen (5c, 6c) gegenüber ausgestattet sind, die bestimmt sind, von einer Verbindungsachse mit einer entsprechenden Struktur durchquert zu sein, wobei Verstärkungsfalten (12) Endfasern (12a) umfassen, die mindestens teilweise etwa senkrecht zur Symmetrieachse (X'X) ausgerichtet sind, die Schalenfasern (7a) dieser zwei Wände an jedem Verbindungsende direkt bedeckend.

5. Pleuelstange (1, 1', 1") nach Anspruch 4, **dadurch gekennzeichnet, dass** die Verstärkungsfalten (12), die vom Typ Gewebe, Stickerei oder eindirektional sind, an jedem Verbindungsende (5, 6) die jeweiligen Außenfläche und/oder die jeweiligen Innenflächen der zwei Verbindungswände (5a und 5b, 6a und 6b) bedecken.

6. Pleuelstange (1, 1', 1") nach einem der vorangehenden Ansprüche, **dadurch gekennzeichnet, dass** die Schalenbahnen (7) und die mindestens eine Verbindungsbahn (14, 15) aus identischen oder chemisch kompatiblen Materialien gebildet sind, wobei die thermoplastische Verbindungsmatrix (14b, 15b) im Kontakt mit der thermoplastischen Schalenmatrix (7b) verschmolzen ist.

7. Pleuelstange (1, 1', 1") nach einem der vorangehenden Ansprüche, **dadurch gekennzeichnet, dass** die thermoplastische Schalenmatrix (7b) und die thermoplastische Verbindungsmatrix (14b, 15b) auf der Basis von mindestens einem Polymer sind, das aus der Gruppe ausgewählt ist, die von den. Polyamiden, den Polyetherimiden (PEI), den Polyphenylensulfiden (PPS), den Polyaryletherketonen (PAEK), den Polyetheretherketonen (PEEK), den Polyetherketonketonen (PEKK) und ihren Legierungen gebildet ist, wobei die Schalenfasern (7a) und/oder die Verbindungsfasern (14a, 15a) vorzugsweise auf der Basis von Karbon sind.

8. Pleuelstange (1', 1") nach einem der vorangehenden Ansprüche, **dadurch gekennzeichnet, dass** der Körpers ferner radial zwischen der mindestens einen Schalenbahn (7) für jede Schale (3, 4) und der mindestens einen Verbindungsbahn (14, 15) oder auch radial zwischen den Verbindungsbahnen (14 und 15) mindestens eine Zwischenschicht (20, 20') zum Dämpfen von insbesondere radialen Stößen (I) aufweist, die aus einem Material hergestellt ist, das imstande ist, die Energie dieser Stöße zu absorbieren und zu verteilen, wobei die mindestens eine Zwischenschicht ferner vorzugsweise imstande ist, den Beschädigungsgrad der Pleuelstange infolge dieser Stöße im Hinblick auf ihren Austausch durch eine Tiefen- und/oder Längenmessung der mindestens einen Schicht zu bezeugen.

9. Aeronautische Decken- oder Bodenstruktur, **dadurch gekennzeichnet, dass** sie mindestens eine Pleuelstange (1, 1', 1") nach einem der vorangehenden Ansprüche aufweist.

10. Herstellungsverfahren einer Pleuelstange (1, 1', 1") nach einem der Ansprüche 1 bis 8, **dadurch gekennzeichnet, dass** es umfasst:
a) eine kontinuierliche Konformation von n ebenen, mehrheitlich eindirektionalen Schalenbahnen (7) (n Ganzzahl ≥ 2) auf der Basis kontinuierlicher imprägnierter Fasern (7a) der thermoplastischen Schalenmatrix (7b), bereitgestellt von n Spulen (9), die diese Bahnen in Richtung eines Konformators (8) abwickeln,
b) ein kontinuierliches Warmformen dieser Schalenbahnen durch Zug, ihre Konsolidierung einschließend, zwecks Erhalts von Profilrohlingen (3' und 4') der Schalen (3 und 4) mit konvexen Außenfläche,
c) ein Erwärmen, gefolgt von einem Formen der zwei Enden (3a und 3b, 4a und 4b) jedes Schalenprofilrohlings zwecks Erhalts jeder Schale (3, 4), aufweisend an ihren zwei Enden zwei jeweilige abgeflachte Verbindungswände (5a und 6a, 5b und 6b) an den Strukturen,
d) für jede zu montierende Pleuelstange eine Montage der zwei Schalen (3 und 4) mit den Längsrändern (3A) einer Schale (3) positioniert gegen diejenigen (4A) der anderen Schale (4), so dass der Körper (2) einer Pleuelstange geformt wird, und an jedem Ende (5, 6) der Pleuelstange den zwei abgeflachten Verbindungswänden (5a und 5b, 6a und 6b), die parallel und voneinander beabstandet sind, wobei diese Montage umgesetzt wird:
- durch Wickeln der mindestens einen Verbindungsbahn (14, 15) um und entlang der Schalen im Bereich des Körpers mit Neigung der Verbindungsfasern (14a, 15a) in einem Winkel ± α in Bezug auf die Symmetrieachse (X'X),
- durch ein begleitendes lokales Erwärmen der um die Schalenbahnen (7) gewickelten Verbindungsbahn(en) oder nur der Schalenbahnen oder auch der Schalenbahnen und gleichzeitig der mindestens einen Verbindungsbahn, und
e) optional eine Zwischenstellung radial zwischen den Schalenbahnen (7) und der mindestens einen Verbindungsbahn (14, 15) oder auch radial zwischen den Verbindungsbahnen (14 und 15) mindestens einer Zwischenschicht (20, 20') zum Dämpfen und Verteilen von vor allem radialen Stößen (I), die aus einem Material hergestellt ist, das imstande ist, die von diesen Stößen auf die Pleuelstange (1', 1") übertragene Energie zu absorbieren und zu verteilen und die vorzugsweise imstande ist, den Beschädigungsgrad der Pleuelstange infolge dieser Stöße im Hinblick auf ihren Austausch durch eine Tiefen-und/oder Längenmessung der mindestens einen Schicht zu bezeugen.

11. Herstellungsverfahren einer Pleuelstange (1, 1', 1") nach Anspruch 10, **dadurch gekennzeichnet, dass** bei Schritt c) das Formen der zwei Enden (3a und 3b, 4a und 4b) jedes Schalenprofilrohlings (3', 4') durch Formen durch Kompression, Gesenkformen oder Thermoformen durchgeführt wird.

12. Herstellungsverfahren einer Pleuelstange (1, 1', 1") nach Anspruch 10 oder 11, **dadurch gekennzeichnet, dass** der Schritt c) ferner das Anwenden auf den abgeflachten Wänden (5a und 6a, 5b und 6b) der jeweiligen Enden (3a und 3b, 4a und 4b) jedes Schalenrohlings (3', 4') von Verstärkungsfalten (12) vorzugsweise von Typ Gewebe, Stickereien oder eindirektional umfasst, umfassend Endfasern (12a), die mindestens teilweise etwa senkrecht zur Symmetrieachse (X'X) ausgerichtet sind, wobei diese derart ausgerichteten Fasern die Schalenfasern (7a) auf und/oder unter den zwei Verbindungswänden (5a und 5b, 6a und 6b), die von jedem Verbindungsende (5, 6) der Pleuelstange aus Schritt d) beabstandet sind, direkt bedecken.

13. Herstellungsverfahren einer Pleuelstange (1, 1', 1") nach einem der Ansprüche 10 bis 12, **dadurch gekennzeichnet, dass** Schritt c) ferner an jedem Ende (3a, 3b, 4a, 4b) jedes Profilrohlings (3', 4') gebohrte Öffnungen (5c, 6c) durch die zwei Verbindungswände (5a und 5b, 6a und 6b) für die Montage einer Verbindungsachse, jeweils bestimmt zur Befestigung an einer Struktur, umfasst.

14. Herstellungsverfahren einer Pleuelstange (1, 1', 1") nach einem der Ansprüche 10 bis 13, **dadurch gekennzeichnet, dass** in Schritt d) das Wickeln der mindestens einen Verbindungsbahn (14, 15) um und entlang der Schalen (3 und 4) jeder Pleuelstange durch Rotationsantrieb der zwei Schalen, die gegenüber positioniert sind, um eine Hülse (13) durchgeführt wird.

15. Herstellungsverfahren einer Pleuelstange (1, 1', 1") nach einem der Ansprüche 10 bis 14, **dadurch gekennzeichnet, dass** für die jeweiligen thermoplastischen Matrizen der Schalenbahnen (7) von Schritt a) und von der mindestens einen Verbindungsbahn (14, 15) von Schritt d) identische oder chemisch kompatible Materialien verwendet werden, wobei die Montage bei diesem Schritt d) durch Umschmelzen der Verbindungsmatrix (14b, 15b) auf der Schalenmatrix (7b) in der Art thermischen Schweißens durchgeführt wird.

16. Herstellungsverfahren einer Pleuelstange (1, 1', 1") nach einem der Ansprüche 10 bis 15, **dadurch gekennzeichnet, dass** verwendet wird:
- für die thermoplastische Schalenmatrix (7b) in Schritt a) und für die thermoplastische Verbindungsmatrix (14b, 15b) in Schritt d) Materialien auf der Basis von mindestens einem Polymer, ausgewählt aus der Gruppe, die von den Polyamiden, den Polyetherimiden (PEI), den Polyphenylensulfiden (PPS), den Polyaryletherketonen (PAEK), den Polyetheretherketonen (PEEK), den Polyetherketonketonen (PEKK) und ihren Legierungen gebildet ist, und vorzugsweise
- Karbonfasern für die Schalenfasern (7a) und/oder die Verbindungsfasern (14a, 15a).

## Claims

1. A composite structural connecting rod (1, 1', 1") that comprises an elongated body (2) that is essentially convex around a longitudinal axis of symmetry (X'X) and two connecting ends (5 and 6) for connecting to adjacent structures, and which is suitable for reacting primarily axial forces generated by these structures, the connecting rod including two shells (3 and 4) with two longitudinal edges (3A and 4A) that are assembled to one another in these edges at said body and that each have a base of at least one shell web (7) including continuous shell fibers (7a) primarily parallel to this axis of symmetry and impregnated with a thermoplastic shell matrix (7b), **characterized in that** the connecting rod incorporates assembly means (14 and 15) for the shells comprising at least one assembly web (14, 15) wound around and along the shells at said body, said assembly web(s) comprising assembly fibers (14a, 15a) primarily inclined by an angle ± α relative to said axis of symmetry and impregnated with a thermoplastic assembly matrix (14b, 15b) melted in contact with the shell matrix.

2. The connecting rod (1, 1', 1") according to claim 1, **characterized in that** each shell (3, 4) has a substantially semi-cylindrical or semi-frustoconical convex outer face at said body (2) and its two longitudinal edges (3A, 4A) are assembled against those of the other shell (4, 3) in the extension of the latter, without mutual lateral overlapping of one edge (3A) of a shell (3) by an edge (4A) of the other shell (4).

3. The connecting rod (1, 1', 1") according to claim 1 or 2, **characterized in that** said assembly means (14, 15) of the shells (3 and 4) comprise at least one pair of said assembly webs (14 and 15) that are primarily unidirectional and are wound substantially in a spiral by opposite angles α and -α, these assembly webs mutually overlapping one another and gripping said webs of shells (7) that are also primarily unidirectional.

4. The connecting rod (1, 1', 1") according to one of the preceding claims, **characterized in that** each of said connecting ends (5, 6) of the connecting rod has two flat parallel connecting walls (5a and 5b, 6a and 6b) that are respectively formed in a single piece with the two shells (3 and 4) on either side of the median longitudinal plane of the connecting rod containing said longitudinal edges (3A and 4A) and which are respectively provided with facing orifices (5c, 6c) designed to be crossed through by a connecting pin for connecting to said corresponding structure, reinforcing plies (12) comprising end fibers (12a) oriented at least partially substantially perpendicular to said axis of symmetry (X'X) directly covering said shell fibers (7a) of these two walls at each connecting end.

5. The connecting rod (1, 1', 1") according to claim 4, **characterized in that** said reinforcing plies (12), which are of the fabric, embroidery or unidirectional type, cover, at each connecting end (5, 6), the respective outer faces and/or the respective inner faces of said two connecting walls (5a and 5b, 6a and 6b).

6. The connecting rod (1, 1', 1") according to one of the preceding claims, **characterized in that** said shell webs (7) and said at least one assembly web (14, 15) are made from identical or chemically compatible materials, said thermoplastic assembly matrix (14b, 15b) being melted in contact with said thermoplastic shell matrix (7b).

7. The connecting rod (1, 1', 1") according to one of the preceding claims, **characterized in that** said thermoplastic shell matrix (7b) and said thermoplastic assembly matrix (14b, 15b) have a base of at least one polymer chosen from the group made up of polyamide (PA), polyetherimides (PEI), polyphenylene sulfide (PPS), polyaryletherketones (PAEK), polyetheretherketones (PEEK), polyetherketoneketones (PEKK) and alloys thereof, said shell fibers (7a) and/or assembly fibers (14a, 15a) preferably having a base of carbon fibers.

8. The connecting rod (1', 1") according to one of the preceding claims, **characterized in that** said body further includes, radially between said at least one shell web (7) for each shell (3, 4) and said at least one assembly web (14, 15) or radially between said assembly webs (14 and 15), of at least one intermediate damping and impact (I) distributing layer (20, 20'), in particular for radial impacts, that is made from a material able to absorb and distribute the energy from these impacts, said at least one intermediate layer further preferably being able to attest to the degree of damage to the connecting rod following these impacts so that it may be replaced, by a measurement of the depth and/or width of said at least one layer.

9. An aeronautic ceiling or floor structure, **characterized in that** it includes at least one connecting rod (1, 1', 1") according to one of the preceding claims.

10. A method for manufacturing a connecting rod (1, 1', 1") according to one of claims 1 to 8, **characterized in that** it comprises:
a) continuously configuring n primarily unidirectional flat shell webs (7) (n integer ≥ 2) with a base of continuous fibers (7a) impregnated with said thermoplastic shell matrix (7b), from n coils (9) unwinding these webs toward a conformer (8),
b) continuous hot shaping of these shell webs by drawing including their consolidation, to obtain profiled blanks (3' and 4') of shells (3 and 4) with convex outer faces,
c) heating followed by shaping of the two ends (3a and 3b, 4a and 4b) of each profiled shell blank, to obtain each shell (3, 4) having, at both of its ends, two respective flat walls (5a and 6a, 5b and 6b) for connecting to said structures,
d) for each connecting rod to be assembled, an assembly of the two shells (3 and 4) with the longitudinal edges (3A) of one shell (3) positioned against those (4A) of the other shell (4) so as to form said connecting rod body (2) and with, at each end (5, 6) of the connecting rod, the two flat connecting walls (5a and 5b, 6a, and 6b) that are parallel and spaced apart from one another, this assembly being implemented:
- by winding said at least one assembly web (14, 15) around and along the shells at said body by inclining said assembly fibers (14a, 15a) by an angle ± α relative to said axis of symmetry (X'X),
- by concomitant local heating of the assembly web(s) wound on the shell webs (7), or only shell webs, or said shell webs and, at the same time, said at least one assembly web, and
e) optionally an interposition, radially between the shell webs (7) and said at least one assembly web (14, 15) or radially between said assembly webs (14 and 15), of at least one intermediate damping and impact distributing layer (20, 20'), in particular for radial impacts (I), that is made from a material able to absorb and distribute the energy transmitted to the connecting rod (1', 1") by these impacts and is preferably able to attest to the degree of damage to the connecting rod following these impacts so that it may be replaced, by a measurement of the depth and/or width of this layer.

11. The method for manufacturing a connecting rod (1, 1', 1") according to claim 10, **characterized in that** in step c), the forming of the two ends (3a and 3b, 4a and 4b) of each profiled shell blank (3', 4') can be done by compression molding, stamping or thermoforming.

12. The method for manufacturing a connecting rod (1, 1', 1") according to claim 10 or 11, **characterized in that** step c) further comprises the application, on said flat walls (5a and 5b, 6a and 6b) of the respective ends (3a and 3b, 4a and 4b) of each shell blank (3', 4'), reinforcing plies (12) preferably of the fabric, embroidery or unidirectional type comprising end fibers (12a) oriented at least partially substantially perpendicular to said axis of symmetry (X'X), these fibers thus oriented directly covering said shell fibers (7a) on and/or under said two connecting walls (5a and 5b, 6a and 6b) spaced apart at each connecting end (5, 6) of the connecting rod obtained in step d).

13. The manufacturing a connecting rod (1, 1', 1") according to one of claims 10 to 12, **characterized in that** step c) further comprises, at each end (3a, 3b, 4a, 4b) of each profiled blank (3', 4'), a piercing of orifices (5c, 6c) through said two connecting walls (5a and 5b, 6a and 6b) for the assembly of a connecting pin respectively designed for fastening of the structure.

14. The manufacturing a connecting rod (1. 1', 1") according to one of claims 10 to 13, **characterized in that** in step d), the winding of said at least one assembly web (14, 15) around and along the shells (3 and 4) of each connecting rod is implemented by rotational driving of the two shells positioned across from one another around a mandrel (13).

15. The manufacturing a connecting rod (1, 1', 1") according to one of claims 10 to 14, **characterized in that** identical or chemically compatible materials are used for the respective thermoplastic matrices of said shell webs (7) in step a) and said at least one assembly web (14, 15) in step d), the assembly being done in this step d) by remelting the assembly matrix (14b, 15b) on the shell matrix (7b) like thermowelding.

16. The method for manufacturing a connecting rod (1, 1', 1") according to one of claims 10 to 15, **characterized in that** one uses:
- for said thermoplastic shell matrix (7b) in step a) and for said thermoplastic assembly matrix (14b, 15b) in step d), materials having a base of at least one polymer chosen from the group made up of polyamide (PA), polyetherimides (PEI), polyphenylene sulfide (PPS), polyaryletherketones (PAEK), polyetheretherketones (PEEK), polyetherketoneketones (PEKK) and alloys thereof, and preferably
- carbon fibers for said shell fibers (7a) and/or assembly fibers (14a,15a).
